# EUROPÄISCHE PATENTANMELDUNG

(11) **EP 0 949 488 A1**
(43) Veröffentlichungstag der Anmeldung: **13.10.1999**
(21) Anmeldenummer: 98124116.9
(22) Anmeldetag: 18.12.1998
(51) Int. Cl.: G01F 23/00, G01F 23/74, G01F 23/72, G01F 23/38

(54) **Einrichtung zur Erfassung des Flüssigkeitsstandes**

(30) Priorität: 06.04.1998 EP 98106249
(71) Anmelder: GEIGER TECHNIK GmbH, D-82467 Garmisch-Partenkirchen (DE)
(72) Erfinder: Geiger, Albert, 82467 Garmisch-Partenkirchen (DE)
(74) Vertreter: Flosdorff, Jürgen, Dr.

(57) **Zusammenfassung**

Die Einrichtung zur Erfassung des Flüssigkeitsstandes in einem Behälter enthält einen Schwimmer, der mit einem Magneten verbunden ist, der mit einem Hall-Sensor zusammenwirkt, der wenigstens ein einem Flüssigkeitsstand entsprechendes Signal für eine Anzeigeeinrichtung erzeugt. Der Hall-Sensor ist im Bereich eines engen Spaltes eines aus zwei Blechstreifen bestehenden Bauteils angeordnet, zwischen denen außerdem ein breiterer Spalt verbleibt, in dem sich der Magnet bewegt. Der breitere Spalt hat eine solche geometrische Form, daß das Hall-Ausgangssignal als Funktion des Abstandes des Magneten von dem Hall-Sensor einen vorbestimmten Kurvenverlauf hat, der bevorzugt linear ist.

## Beschreibung

Die Erfindung betrifft eine Einrichtung zur Erfassung des Flüssigkeitsstandes in einem Behälter, bei dem es sich beispielsweise um einen Bremsflüssigkeitsbehälter, einen Benzintank, einen Kühlwasserbehälter, einen Lenkflüssigkeitsbehälter, einen Scheibenwaschbehälter, einen Ölbehälter oder dergleichen handeln kann.

Zur Flüssigkeitsniveauüberwachung werden meist Reed-Schalter eingesetzt. Diese Reed-Schalter haben zwei normalerweise in einem kleinen Abstand voneinander angeordnete Kontakte, die sich in einem zugeschweißten Glasröhrchen befinden, das mit einem inerten Schutzgas gefüllt ist. Bei Annäherung eines Magneten werden die Kontakte geschlossen, wodurch ein Schaltvorgang ausgelöst wird. Dieser Schaltvorgang kann beispielsweise das Aufleuchten eines Lämpchens bewirken, das auf das Erreichen eines Mindestflüssigkeitsstandes hinweist.

Reed-Schalter sind verhältnismäßig preiswert, sie haben aber eine ziemlich hohe Fehlerquote. Wenn sich in dem Glasröhrchen partikelförmige Fremdstoffe befinden, die sich zwischen die Kontakte setzen, können sie deren Berührung verhindern. Bei Einwirken einer schlagartigen Belastung kann zudem das Glasröhrchen leicht brechen und das Ansprechverhalten des Reed-Schalters verändern.

Der vorliegenden Erfindung liegt die Aufgabe zugrunde, eine Einrichtung zur Erfassung des Flüssigkeitsstandes anzugeben, die weniger fehleranfällig ist.

Diese Aufgabe wird erfindungsgemäß durch die Merkmale des Patentanspruchs 1 gelöst.

Vorteilhafte Ausgestaltungen der Erfindung ergeben sich aus den Unteransprüchen.

Die erfindungsgemäße Niveauüberwachungseinrichtung verwendet einen Hall-Sensor, dem sich ein Magnet annähert oder sich von diesem entfernt, der entweder direkt mit einem Schwimmer oder beispielsweise über ein Hebelsystem mit einem solchen verbunden ist. Das Magnetfeld des Dauermagneten lenkt in Abhängigkeit von seiner Stärke einen Stromfluß durch das Siliciumelement des Hall-Sensors mehr oder weniger weit ab, wodurch ein oder mehrere Signale und damit beispielsweise Schaltvorgänge hervorgerufen werden können.

Hall-Sensoren haben eine äußerst geringe Fehlerquote, und sie sind weitestgehend unempfindlich gegen schlagartige mechanische Belastung, so daß die erfindungsgemäße Einrichtung zur Erfassung des Flüssigkeitsstandes in einem Behälter mit sehr viel höherer Zuverlässigkeit arbeitet, als dies beim Stand der Technik der Fall ist.

Es liegt im Rahmen der Erfindung, daß die Niveauüberwachungseinrichtung mehrere Hall-Sensoren enthalten kann, worauf weiter unten noch näher eingegangen wird.

Der wenigstens eine Hall-Sensor kann ein oder mehrere Signale zur diskreten Anzeige eines oder mehrerer Flüssigkeitsstände erzeugen, beispielsweise können die Flüssigkeitsstände 4/4, 3/4, 2/4 und 1/4 angezeigt werden.

Der wenigstens eine Hall-Sensor kann aber auch Signale zur kontinuierlichen Anzeige des Flüssigkeitsstandes abgeben, wozu er gegebenenfalls mit einer Auswerteelektronik ausgerüstet sein kann.

Bevorzugt ist, daß der Hall-Sensor auf einer Platine sitzt, die über Kontaktfahnen die Signale aus dem Behälter herausführen kann und dabei beispielsweise einer Anzeigeeinrichtung zuführt, bei der es sich beispielsweise um eine Tankanzeige handeln kann.

Die Platine mit dem Hall-Sensor kann durch ein Gehäuse gegen die Flüssigkeit abgeschirmt sein.

Der wenigstens eine Hall-Sensor muß auch nicht unbedingt auf einer Platine sitzen, sondern er kann auf geeignete Weise mit Kontaktfahnen in Verbindung stehen, die beispielsweise durch den Gehäusedeckel hindurchführen, um die Signale des wenigstens einen Hall-Sensors einer Auswerte- und/oder Anzeigeeinrichtung zuzuführen.

Ferner ist erfindungsgemäß vorgesehen, daß der wenigstens eine Hall-Sensor im Bereich eines engen Spaltes eines aus ferromagnetischem Material bestehenden Bauteils angeordnet ist, das einen weiteren Spalt aufweist, in dem sich der Schwimmer mit dem Magneten oder aber der Magnet allein bewegt, wenn dieser über ein Gestänge mit einem Schwimmer verbunden ist. Dabei kann das aus ferromagnetischem Material bestehende Bauteil vertikal in dem Behälter angeordnet sein.

Nach einem weiteren wesentlichen Gesichtspunkt der Erfindung wird vorgeschlagen, daß der Spalt, in dem sich der Magnet bewegt, eine solche geometrische Form hat, daß das Hall-Ausgangssignal in Abhängigkeit von der jeweiligen Position des Magneten in dem Spalt, also als Funktion einer Höhe X des ferromagnetischen Bauteils, einen vorgegebenen Kurvenverlauf hat. Dabei ist bevorzugt, daß sich das Hall-Ausgangssignal im wesentlichen linear mit der Höhe **X** ändert, wobei die Erfindung aber nicht auf den linearen Zusammenhang zwischen Ausgangssignal und Abstand des Magneten von dem Hall-Sensor beschränkt ist.

Es kann auch wünschenswert sein, daß sich das Hall-Ausgangssignal nicht-linear ändert, indem das ferromagnetische Bauteil entsprechende, einander zugewandte Innenkonturen erhält. Wichtig ist, daß in den interessierenden Bereichen stets eine Auflösung der Zuordnung Ausgangssignal/Weg möglich ist. Dies ist am besten dann der Fall, wenn der Kurvenverlauf des über dem Weg aufgetragenen Ausgangssignal linear ist.

Die genaue Form des ferromagnetischen Bauteils, mit dem in Abhängigkeit vom jeweiligen Abstand des Magneten von dem Hall-Sensor gewünschte Magnetfeldstärken und damit Hall-Ausgangssignale hervorgerufen werden, läßt sich ohne weiteres durch einfache Versuche ermitteln. Das ferromagnetische Bauteil besteht bevorzugt aus zwei im Abstand voneinander angeordneten Blechstreifen, die an einem Endbereich in einem kleinen, einen engen Spalt bildenden Abstand voneinander angeordnet sind, in dem sich der Hall-Sensor befindet. Die Blechstreifen sind in einer bevorzugten Ausführungsform spiegelsymmetrisch ausgebildet und begrenzen mit ihren einander zugewandten Innenkonturen den langgestreckten Spalt, in dem sich der Magnet in Abhängigkeit vom Füllstand des Behälters bewegt.

Dabei liegt es im Rahmen der Erfindung, daß die Blechstreifen nicht spiegelbildlich identische, sondern unterschiedliche Formen haben können. Anstelle von Blechstreifen können auch z.B. Drahtstücke aus ferromagnetischem Material verwendet werden, und die beiden Bestandteile des ferromagnetischen Bauteils können in Kunststoff eingeschlossen sein.

Nachfolgend werden die beiden Bestandteile des ferromagnetischen Bauteils durchgehend "Blechstreifen" genannt. Diese Blechstreifen können zur Erzielung der gewünschten Hall-Ausgangssignale eine Innenkontur haben, die stetig oder aber unstetig verläuft. Beispielsweise können die Innenkonturen eine durchgehende Bogenform haben, oder es können polygonale Konturen oder solche mit Vorsprüngen oder Einschnitten vorgesehen sein. Wesentlich ist, daß der Konturenverlauf die gewünschte Variation des Hall-Ausgangssignals in Abhängigkeit vom Abstand des Magneten von dem Hall-Sensor hervorruft.

Wenn der Behälter, dessen Flüssigkeitsstand gemessen wird, unterschiedliche horizontale Querschnittsflächen hat, wird dies nach einem weiteren Gesichtspunkt der Erfindung ebenfalls in einem entsprechenden Verlauf der Innenkonturen der beiden Blechstreifen berücksichtigt, so daß vorzugsweise eine lineare Zuordnung von Hall-Ausgangssignal und Füllmenge des Behälters erfolgt. Dies bedeutet, daß in den Bereichen, in denen der Behälter die größeren horizontalen Querschnittsflächen hat, eine verhältnismäßig geringe Bewegung des Magneten zu einer stärkeren Änderung des Hall-Ausgangssignals führt als in den Bereichen des Behälters, die kleinere horizontale Querschnittsflächen haben. Auf diese Weise läßt sich der jeweilige Füllstand sehr genau anzeigen.

Insbesondere wenn keine kontinuierliche Anzeige des Füllstandes erfolgen soll, sondern das Erreichen bestimmter Füllhöhen (z.B. 1/4, 2/4, 3/4, 4/4) kann vorgesehen sein, daß sich der Spalt, in dem sich der Magnet bewegt, an diesen Füllständen jeweils so verengt, daß die Magnetfeldstärke beim Durchgang des Magneten durch diese Verengungen signifikant zunimmt, wodurch vorbestimmte Ausgangssignale erhältlich sind. Es kommt auch in Betracht, an bestimmten Stellen die Spaltbreite punktuell zu vergrößern, wodurch ein zugehöriger Abfall der Magnetfeldstärke hervorgerufen wird.

Weiter wird vorgeschlagen, daß der enge Spalt, vorzugsweise Luftspalt, in dem der Hall-Sensor sitzt, zwischen querschnittlich spitz zulaufenden Endabschnitten der beiden Blechstreifen gebildet ist. Hierdurch wird das Magnetfeld besonders wirkungsvoll in dem Hall-Sensor konzentriert.

Nach einem weiteren Vorschlag der Erfindung können in einer bevorzugt vertikalen Wand des aus ferromagnetischem Material bestehenden Bauteils mehrere, vorzugsweise vier Luftspalte im Abstand übereinander ausgebildet sein, in denen jeweils ein Hall-Sensor sitzt. Im Abstand neben dieser Wand befindet sich bevorzugt eine durchgehende weitere Wand, wodurch ein vertikaler Kanal gebildet ist, der zur Führung eines Schwimmers mit Magneten geeignet ist.

In Abhängigkeit von der jeweiligen Position des Magneten treten dabei an den vier Luftspalten jeweils zugehörige Luftspalt-Verluste am Magnetfeld auf, die beispielsweise zur Anzeige von vier Flüssigkeitsständen genutzt werden können. Mit einer Auswerteelektronik können die Signale der vier Hall-Sensoren auch zur weitgehend kontinuierlichen Flüssigkeitsniveauanzeige herangezogen werden.

Weitere Einzelheiten der Erfindung ergeben sich aus der nachfolgenden Beschreibung einiger bevorzugter Ausführungsformen der Erfindung mit Bezug auf die Zeichnung. Dabei zeigen auf weitgehend schematische Weise:
- Fig. 1: eine Darstellung einer ersten Ausführungsform der Erfindung;
- Fig. 2: eine Variation der Ausführungsform gemäß Fig. 1;
- Fig. 3: eine weitere Variation der Ausführungsform gemäß Fig. 1;
- Fig. 4: ein Diagramm, das das Hall-Ausgangssignal als Funktion des Weges des Magneten bei der in Fig. 2 dargestellten Ausführungsform darstellt;
- Fig. 5: ein Diagramm mit einer linearen Beziehung zwischen dem Hall-Ausgangssignal und dem Weg des Magneten;
- Fig. 6: eine Ausführungsform mit einer schematisch angedeuteten Innenkontur der beiden Blechstreifen, die die lineare Zuordnung gemäß Fig. 5 hervorruft;
- Fig. 7: eine mögliche Behälterform;
- Fig. 8: ein lineares Verhältnis zwischen einem Hall-Ausgangssignal und dem Weg des Magneten bei einem Behälter gemäß Fig. 7;
- Fig. 9: ein nur schematisch dargestellter Verlauf der Innenkonturen der beiden Blechstreifen zur Erzielung des linearen Kurvenverlaufs gemäß Fig. 8 bei einem Behälter gemäß Fig. 7;
- Fig. 10: eine weitere Ausführungsform eines ferromagnetischen Bauteils;
- Fig. 11 und 12: Seitenansichten des ferromagnetischen Bauteils gemäß Fig. 10;
- Fig. 13: Darstellungen eines wesentlichen Teils einer weiteren Ausführungsform der Erfindung;
- Fig. 14: eine Variation der Ausführungsform gemäß Fig. 13.

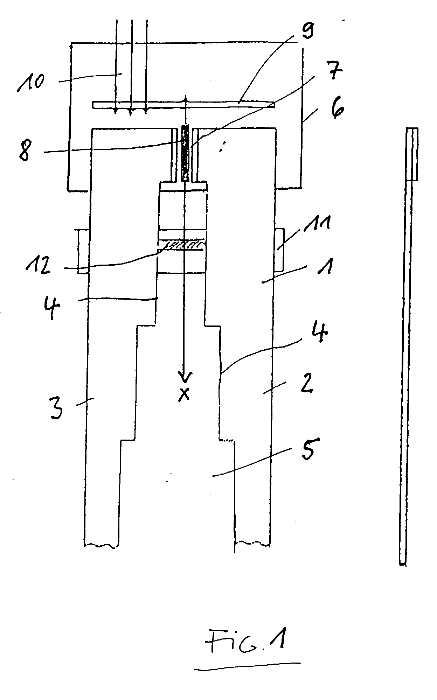

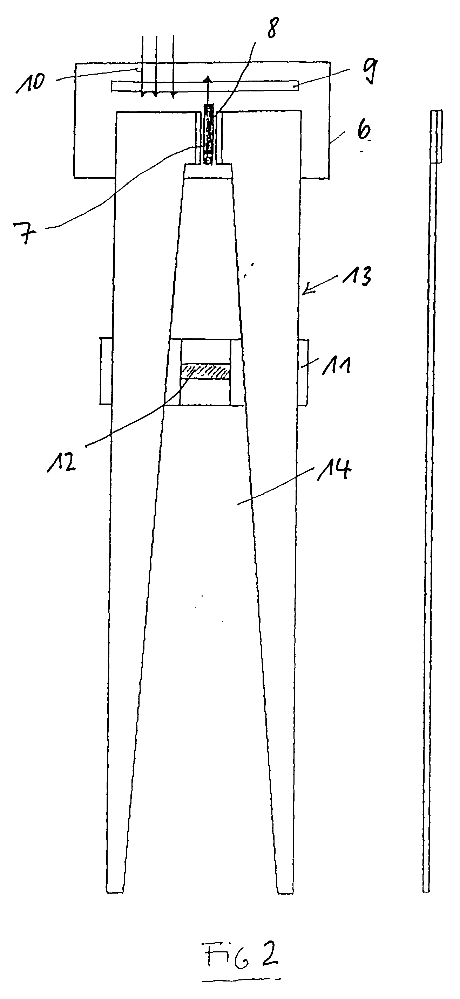

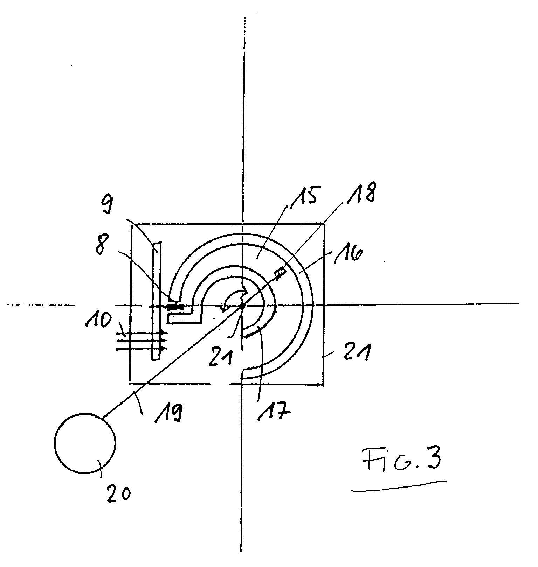

Bei der Ausführungsform der Fig. 1 ist in dem Flüssigkeitsbehälter ein aus ferromagnetischem Material, also beispielsweise Eisen, bestehendes Bauteil 1 angeordnet, das aus zwei spiegelsymmetrischen Hälften 2, 3 besteht, die eine einander zugewandte stufenförmige Innenkontur 4 haben. Hierdurch ist zwischen den beiden Hälften 2, 3 ein Spalt 5 gebildet, der sich in der Einbaulage von oben nach unten stufenförmig verbreitert.

Der obere Bereich des Bauteils 1 ist durch ein Gehäuse 6 gegenüber der in dem Flüssigkeitsbehälter befindlichen Flüssigkeit abgekapselt. In dem zwischen den Hälften 2, 3 am oberen Randbereich verbliebenen Luftspalt 7 sitzt ein Hall-Sensor 8, der mit einer ebenfalls in dem Gehäuse 6 befindlichen und von diesem gegen Flüssigkeit abgeschirmten Platine 9 verbunden ist, von der Kontaktfahnen 10 auf nicht näher dargestellt Weise aus dem Flüssigkeitsbehälter herausführen.

Das ferromagnetische Bauteil 1 dient einem Schwimmer 11 als Führung, in den ein Magnet 12 eingelassen ist, der in dem stufenförmig sich von oben nach unten verbreiternden Spalt bzw. Zwischenraumraum S des Bauteils 1 sitzt. X bezeichnet den jeweiligen Abstand des Magneten von dem Hall-Sensor 8.

Die Breite des Spalts 5, der zwischen den beiden ferromagnetischen Bauteilhälften 2, 3 liegt, moduliert das Magnetfeld, das der Hall-Sensor 8 erfaßt. Die in Fig. 1 dargestellte Ausführungsform ist damit besonders dafür geeignet, daß der Hall-Sensor 8 jeweils dann ein Signal abgibt (und beispielsweise einen Schaltvorgang auslöst), wenn der Magnet 12 eine Abstufung des Spalts 5 erreicht, bzw. passiert.

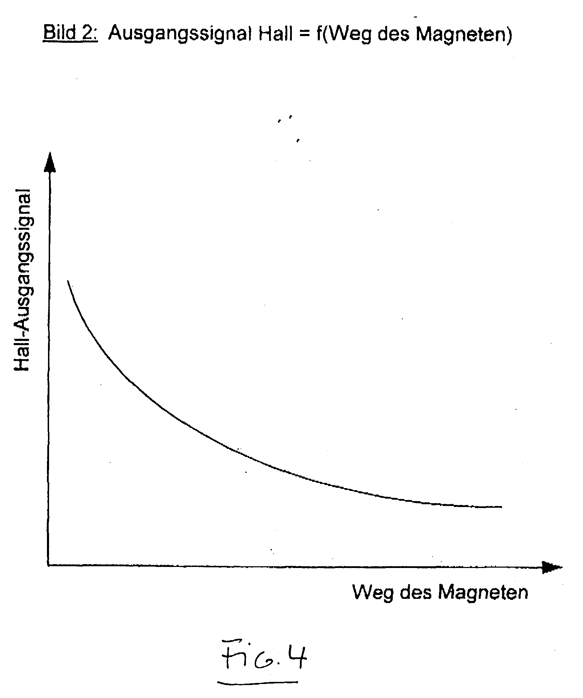

Figur 2 zeigt ein abgeändertes ferromagnetisches Bauteil 13, bei dem der Spalt 14 zwischen seinen beiden spiegelsymmetrischen Hälften die Form eines kontinuierlichen Keiles hat, d.h. der Spalt 14 verbreitert sich stetig von oben nach unten. Diese Ausbildung ist besonders dann zweckmäßig, wenn der in dem oberen Luftspalt 7 abgekapselt angeordnete Hall-Sensor Signale zur kontinierlichen Anzeige des Flüssigkeitsstandes liefern soll.

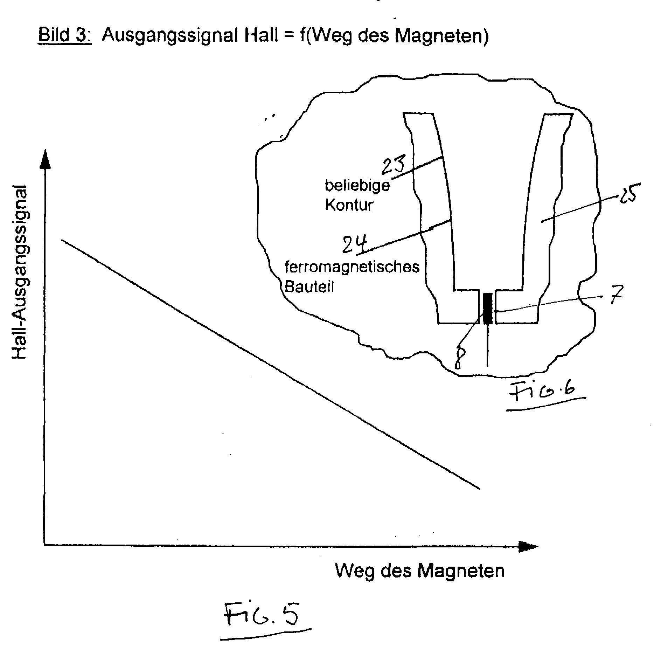

Bei der in Fig. 3 dargestellten Abwandlung der Ausführungsform gemäß Fig. 2 verbreitert sich der Spalt 15 zwischen zwei ferromagnetischen Bauteilen 16 und 17 ebenfalls kontinuierlich, jedoch haben hier die Bauteile 16 und 17 eine gebogene Form. In dem Zwischenraum 15 befindet sich ein Magnet 18, der über ein nur schematisch angedeutetes Gestänge 19 mit einem Schwimmer 20 verbunden ist, der je nach Flüssigkeitsstand über das Gestänge 19 den Magneten 18 auf einer Kreisbahn um ein Zentrum 21 dreht. Ein Hall-Sensor 8 befindet sich wie bei den vorigen Ausführungsformen in einem Luftspalt am Endbereich der beiden Bauteile 16 und 17 und ist mit einer Platine 9 und Kontaktfahnen 10 verbunden. Die ganze Anordnung ist in einem Gehäuse 21 vor der umgebenden Flüssigkeit geschützt, wobei auf geeignete Weise gewährleistet ist, daß da, wo das Gestänge 19 aus dem Gehäuse 21 herausführt, keine Flüssigkeit ins Innere des Gehäuses 21 eindringen kann.

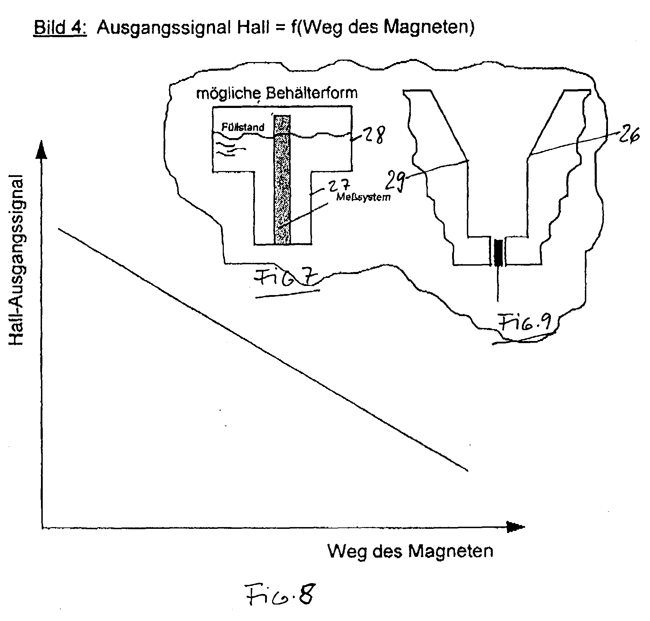

Fig. 4 zeigt, daß sich das Hall-Ausgangssignal nicht linear ändert, wenn sich der Magnet 12 bei der Ausführungsform gemäß Fig. 2 entlang eines keilförmig figurierten Spaltes bewegt, sondern auf einer Kurvenbahn, die in Fig. 4 nur schematisch angedeutet ist.

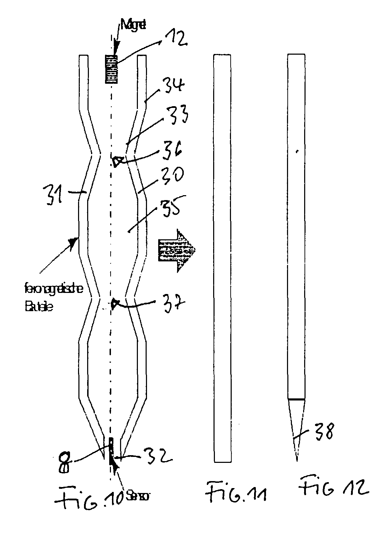

Bevorzugt ist ein linearer Verlauf gemäß Fig. 5, der durch eine durch einfache Versuche zu ermittelnde Innenkontur 22 der ferromagnetischen Hälften 24, 25 ermittelbar ist. Fig. 6 zeigt eine bogenförmig auseinanderlaufende Innenkontur 23 der beiden Bauteilhälften 24, 25. Fig. 6 deutet ferner an, daß entgegen der Darstellung der Figuren 1 und 2 die Anordnung so getroffen sein kann, daß das ferromagnetische Bauteil 24, 25 mit in dem Flüssigkeitsbehälter unten liegendem engen Luftspalt 7, Hall-Sensor 8 etc. angeordnet werden kann.

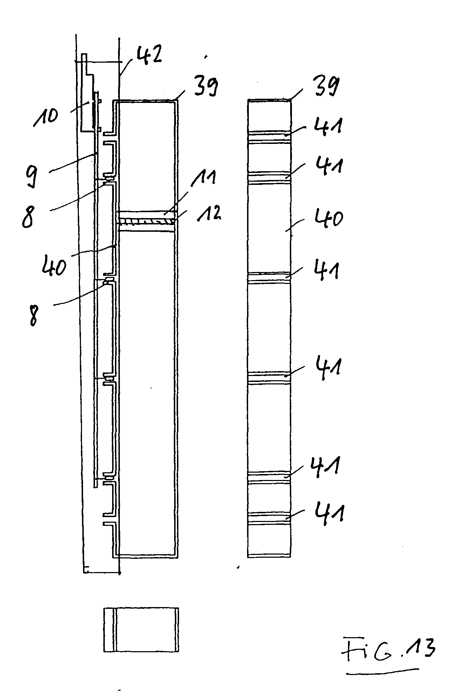

In Fig. 7 ist schematisch angedeutet, daß der Flüssigkeitsbehälter unterschiedlich große horizontale Querschnittsflächen haben kann, so daß kein linearer Zusammenhang zwischen dem Flüssigkeitsniveau und der in dem Behälter befindlichen restlichen Flüssigkeitsmenge besteht. Dennoch kann der in Fig. 8 dargestellte lineare Zusammenhang zwischen dem Hall-Ausgangssignal und dem Flüssigkeitsniveau -oder aber ein anderer gewünschter Kurvenverlauf- erhalten werden, wenn die Innenkontur 26 außerdem die zugehörige Behälterform berücksichtigt. Rein schematisch ist angedeutet, daß eine sprunghafte Änderung der horizontalen Querschnittsflächen 27, 28 in Fig. 7 zu einem polygonalen Verlauf der Innenkontur 26 mit einer Knickstelle 29 führen kann. Der genaue Verlauf zur Erzielung des gewünschten Zusammenhangs zwischen Hall-Ausgangssignal und des Magneten ist wiederum durch einfache Versuche ermittelbar.

Fig. 10 zeigt zwei Transformatorblechstreifen 30, 31, die ein ferromagnetisches Bauteil bilden, in dessen Spalt sich ein Magnet 12 bewegt, dessen magnetisches Feld in dem Fokuspunkt 32 von einem Hall-Sensor 8 erfaßt wird. Dieses ferromagnetische Gehäuse hat eine polygonale Innenkontur 33 und eine ebensolche Außenkontur 34, so daß die beiden Bauteilhälften 30, 31 auch aus Drahtstücken hergestellt werden können. Der Spalt 34, in dem sich der Magnet 12 bewegt, hat zwei punktförmige Verengungen (Pfeile 36, 37), an denen eine signifikant größer Magnetfeldstärke hervorgerufen wird.

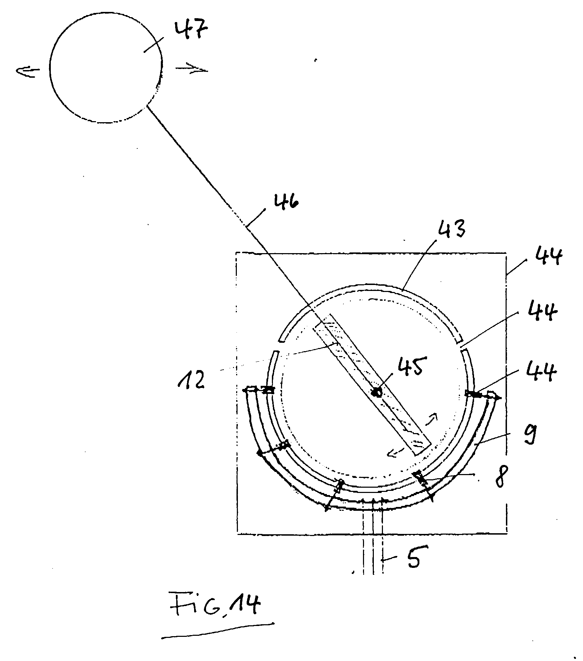

Während gemäß Fig. 11 die beiden Blechstreifen 30, 31 eine durchgehend konstante Querschnittsbreite haben, sind bei der Ausführungsform gemäß Fig. 12 die unteren Enden 38 der Bauteilhälften 30, 31 spitz zulaufend, um ein möglichst großes Magnetfeld an dem Hall-Sensor 8 zu konzentrieren.

Bei der Ausführungsform gemäß Fig. 13 befindet sich in dem Flüssigkeitsbehälter ein Gehäuse 39 aus magnetisch leitendem Material, das in der Einbaulage wiederum vertikal angeordnet ist. In einer Seitenwand 40 des Gestells 39 befinden sich sechs über die gesamte Breite verlaufende spaltförmige Öffnungen 41. In vier dieser Luftspalte 41 sind Hall-Sensoren 8 angeordnet, die wiederum mit einer Platine 9 und Kontaktfahnen 10 verbunden sind. In dem obersten und dem untersten Luftspalt ist kein Hall-Sensor angeordnet.

Der Bereich der Platine 9 und der Hall-Sensoren 8 ist durch eine nur schematisch angedeutete Abschirmeinrichtung 42, die beispielsweise eine Rohrform haben kann, gegen die Flüssigkeit geschützt.

Im Inneren des ferromagnetischen Bauteils 39 befindet sich ein Schwimmer 11 mit einem Magneten 12 dessen Position sich in Abhängigkeit von dem jeweiligen Flüssigkeitsstand einstellt. Die Luftspalte 41, in denen die Hall-Sensoren 8 angeordnet sind, verändern in Abhängigkeit von der Entfernung des Magneten 12 jeweils das auf die Hall-Sensoren 8 einwirkende Magnetfeld, wodurch die Hall-Sensoren die Position des Magneten 12 erfassen können. Diese Ausführungsform ist bestens dafür geeignet, die Flüssigkeitsstände anzuzeigen, die mit der Höhenlage der einzelnen Hall-Sensoren 8 übereinstimmt, ohne aber hierauf beschränkt zu sein.

In Figur 14 ist das lineare System der Figur 13 zu einem kreisförmigen System abgeändert. Ein kreisförmiges Gehäuse 43 aus ferromagnetischem Material hat an mehreren Stellen Luftspalte 44, in denen wiederum Hall-Sensoren 8 sitzen, die mit einer kreisbogenförmigen Platine 9 verbunden sind. Die Anordnung bebefindet sich zusammen mit einem Magneten 12 innerhalb eines flüssigkeitsdichten Gehäuses. Der Magnet 12 ist um eine Achse 45 über ein Gestänge 46 drehbar, das mit einem Schwimmer 47 verbunden ist.

## Patentansprüche

1. Einrichtung zur Erfassung des Flüssigkeitsstandes in einem Behälter, mit einem Schwimmer (11), der mit einem Magneten (12) verbunden ist und mit wenigstens einem Hall-Sensor (8) zusammenwirkt, der wenigstens ein einem Flüssigkeitsstand entsprechendes Signal für eine Anzeigeeinrichtung erzeugt,
**dadurch gekennzeichnet**,
daß der wenigstens eine Hall-Sensor (8) im Bereich eines engen Spaltes (7) eines aus ferromagnetischen Material bestehenden Bauteils angeordnet ist, das einen weiteren Spalt (5, 14, 15) aufweist, in dem sich der Magnet (12) bewegt.

2. Einrichtung nach Anspruch 1,
dadurch gekennzeichnet, daß der weitere Spalt eine solche geometrische Form hat, daß das Hall-Ausgangssignal als Funktion des Abstands x des Magneten von dem Hall-Sensor einen vorbestimmten Kurvenverlauf hat.

3. Einrichtung nach Anspruch 2,
dadurch gekennzeichnet, daß der Kurvenverlauf im wesentlichen linear ist.

4. Einrichtung nach Anspruch 1, wobei der Behälter unterschiedliche horizontale Querschnittsflächen hat,
dadurch gekennzeichnet, daß der weitere Spalt eine solche geometrische Form hat, daß das Hall-Ausgangssignal als Funktion der Füllmenge des Behälters einen vorbestimmten Kurvenverlauf hat.

5. Einrichtung nach Anspruch 4,
dadurch gekennzeichnet, daß der Kurvenverlauf im wesentlichen linear ist.

6. Einrichtung nach einem der Ansprüche 1 bis 5,
dadurch gekennzeichnet, daß das Gehäuse aus zwei im Abstand voneinander angeordneten Blechstreifen besteht.

7. Einrichtung nach Anspruch 6,
dadurch gekennzeichnet, daß die Blechstreifen spiegelsymmetrisch ausgebildet sind.

8. Einrichtung nach Anspruch 6,
dadurch gekenzeichnet, daß die Blechstreifen unterschiedliche Formen haben.

9. Einrichtung nach einem der Ansprüche 1 bis 5,
dadurch gekennzeichnet, daß das Gehäuse aus zwei im Abstand voneinander angeordneten ferromagnetischen Drahtabschnitten besteht.

10. Einrichtung nach einem der Ansprüche 1 bis 9,
dadurch gekennzeichnet, daß die beiden Bauteil-Hälften, insbesondere Blechstreifen, im Bereich des engen Spalts zur Erhöhung der Magnetfeldstärke spitz zulaufen.
